Europäisches Patentamt

European Patent Office

Office européen des brevets

(19)

(11) Publication number: **0 249 246 B1**

# EUROPEAN PATENT SPECIFICATION

(12)

(45) Date of publication of patent specification: **29.12.93**    (51) Int. Cl.5: **B60G 17/04**

(21) Application number: **87108615.3**

(22) Date of filing: **15.06.87**

(54) **Actively controlled automotive suspension system with adjustable rolling stability.**

(30) Priority: **13.06.86 JP 137875/86**

(43) Date of publication of application:
**16.12.87 Bulletin 87/51**

(45) Publication of the grant of the patent:
**29.12.93 Bulletin 93/52**

(84) Designated Contracting States:
**DE GB**

(56) References cited:
**EP-A- 0 114 757**
**EP-A- 0 172 272**
**FR-A- 2 137 849**
**US-A- 3 124 368**

**IEEE TRANSACTIONS ON INDUSTRIAL ELEC-TRONICS, vol. IE-32, no. 4, November 1985,pages 355-363, IEEE, New York, US; J.M. HAMILTON: "Computer-optimized adap-tivesuspension technology (COAST)**

**PATENT ABSTRACTS OF JAPAN, vol. 9, no. 202 (M-405)[1925], 20th August 1985;& JP-A-60 64 014 (NISSAN JIDOSHA K.K.) 12.04.1985**

(73) Proprietor: **NISSAN MOTOR CO., LTD.**
**2 Takara-cho, Kanagawa-ku**
**Yokohama-shi Kanagawa-ken 221(JP)**

(72) Inventor: **Fukushima, Naoto**
**17-15, Ohgigayatsu 2-chome**
**Kamakura-shi Kanagawa-ken(JP)**
Inventor: **Yamaguchi, Hirotsugu**
**45, Hamasuka 6-chome**
**Chigasaki-shi Kanagawa-ken(JP)**
Inventor: **Akatsu, Yohsuke**
**Minamihiyoshidanchi 32-202**
**Kohoku-ku**
**Yokohama-shi Kanagawa-ken(JP)**
Inventor: **Hano, Sunao**
**Urago-ryo**
**68, Oppamahigashi-cho 3-chome**
**Yokosuka-shi Kanagawa-ken(JP)**

(74) Representative: **TER MEER - MÜLLER - STEIN-MEISTER & PARTNER**
**Mauerkircherstrasse 45**
**D-81679 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

PATENT ABSTRACTS OF JAPAN, vol. 10, no. 231 (M-506)[2287], 12th August 1986;& JP-A-61 64 512 (MITSUBISHI MOTORS CORP.) 02-04-1986

PATENT ABSTRACTS OF JAPAN, vol. 10, no. 231 (M-506)[2287], 12th August 1986;& JP-A-61 64 510 (MITSUBISHI MOTORS CORP.) 02-04-1986

## Description

The invention relates to an actively controlled suspension system for an automotive vehicle, comprising:
- first, second, third and fourth pressure means incorporated in the suspension system of the automotive vehicle between the vehicle body at a front portion of a first and a second lateral side of the vehicle body and at a rear portion of said first and second lateral side, respectively, and suspension members rotatably supporting a road wheel for supporting said vehicle body on said suspension member, each of said pressure means including a variable pressure chamber being supplied by first, second, third, and fourth pressure control valves;
- sensor means for monitoring lateral and/or longitudinal acceleration acting on the vehicle body to provide a sensor signal indicative thereof;
- a controller responsive to said sensor signal to amplify said sensor signal with a preselected gain to provide suspension control signals to said pressure control valves for adjusting the fluid pressure in each of said variable pressure chambers for suppressing attitude change of the vehicle body due to the lateral and/or longitudinal acceleration.

An actively controlled suspension system of the above kind is disclosed in US-A-3 124 368, which system amplifies sensor signals by preselected gains to derive control signals to be fed to hydraulic control valves for suppressing vehicle attitude change, such as rolling, pitching or yawing of the vehicle body.

In "IEEE Transactions on Industrial Electronics", Vol. IE-32, No. 4, November 1985, pages 355-363, an actively controlled suspension system for an automotive vehicle is described, which system uses a plurality of parameters of the driving conditions of the vehicle for controlling the wheel suspension of the vehicle.

Generally, a typical construction of a suspension assembly comprises a suspension coil and shock absorber and is interposed between a vehicle body and a suspension member supporting a vehicular wheel, in order to constitute automotive suspension system with the suspension member. The suspension coil spring generally resists against load applied to maintain the vehicle body and the road wheel in a predetermined positional relationship to each other. On the other hand, the shock absorber is intended to damp or absorb vibrations transmitted between the vehicle body and the road wheel. The automotive suspension system may be further provided with a roll-stabilizer for suppressing vehicular rolling motion.

Some of the many kinds of automotive suspension systems include hydraulic circuits associated with fluid chambers in hydraulic shock absorbers for the controlling balance between the fluid pressures in the fluid chambers according to the relative displacement between the vehicle body and road wheel. Such hydraulic circuits include a fluid pressure source supplying working fluid at a given pressure to the circuits and pressure control valves. The pressure control valves hydraulically connect and disconnect the fluid pressure source to the fluid chambers of the hydraulic shock absorbers for controlling pressure supply. The pressure control valves are controlled by an electric or electronic control system which switches the various valve positions to selectively introduce or drain fluid pressure into or from the fluid chambers so as to generate a damping force which suppresses vehicle body and road wheel vibrations.

These conventional positively controlled suspension systems encounter various defects and have not been at all satisfactorily capable of suppressing vibrations or bouncing of the vehicle body in order to ensure riding comfort. Specifically, conventional systems produce damping force by means of an orifice in the hydraulic circuit. However, due to flow resistance through the orifice, fluid pressure differences between the fluid chambers in the shock absorber cannot be easily balanced. When the balance is disturbed, the shock absorber tends to transmit vibration of the road wheel to the vehicle body which degrades riding comfort.

In order to provide an improvement, a positively or actively controlled automotive suspension system has been proposed in European Patent First Publication 01 93 124, published on September 3, 1986, and assigned to the common owner of the present invention. The proposed positively controlled automotive suspension system comprises a hollow cylinder defining a chamber, a piston thrustingly received within the chamber of the cylinder and defining therein a first and second fluid chambers, both filled with a working fluid the piston being free to move axially with the chamber, a fluid pressure source, a hydraulic circuit connecting the first and second fluid chamber and the fluid presure source, a pressure control valve disposed within the hydraulic circuit and adapted to selectively establish and block fluid communication between the first and second fluid chamber and the fluid pressure source, means, responsive to relative displacement between a vehicle body and road wheel assembly out of a predetermined normal range, for controlling the pressure control valve so as to adjust the fluid pressure in the first and second fluid chambers in order to adjust the relative distance between the vehicle body and the road wheel assembly back to within the predetermined normal range, and means, responsive to bounding and rebounding motion of the road wheel relative to the vehicle body for controlling the pressure control valve so as to adjust the fluid pressure in the first and second fluid chambers to assist smooth displacement of the piston within the cylinder thereby absorbing bounding and rebounding energy which would otherwise be transmitted to the vehicle body.

Another type of active suspension system has been disclosed in 'Autocar' published by Haymarket Publishing Ltd., on September 10, 1983. The disclosed system includes a single cylinder actuator which has a cylinder tube connected to the vehicle body and a piston with a piston rod connected to the suspension member. The cylinder actuator is connected to a hydraulic pressrue source via an electromagnetic valve. The hydraulic cylinder is also connected to an accumulator via an orifice. With the construction, the pressurized fluid to absorb road shock and suppress attitude change of the vehicle body has been supplied from the pressure source via the pressure control valve. This loweres responsabiulity of pressure control in the hydraulic actuator.

On the other hand, an automotive suspension system which has adjustable roll-stabilization ability has been disclosed in the Japanese Patent First Publication (Tokkai) Showa 60-252013. The disclosed suspension system allows mechanical adjustment of the roll-stabilization ability by providing mechanical coupling in a roll-stabilizer. However, the adjustable roll-stabilizer cannot perform precise and wide range roll-stability adjustment.

It is an object of the present invention to provide an actively controlled suspension system which allows a precise, variable, but easy adjustment of the suspension control.

In order to accomplish the aforementioned object, an actively controlled suspension system according to the present invention is characterized by

- a gain setting means which is adapted to vary the preselected gain according to a preselected gain control signal, said gain setting means comprising a steering angle sensor for monitoring the steering angle to provide a signal indicative thereof;
- said controller calculating a front and a rear suspension control signal from said amplified sensor signal responsive to the lateral acceleration with a front and a rear gain, said front and rear suspension control signal being fed to said first and second pressure control valves and to said third and fourth pressure control valves, respectively, to suppress rolling motion caused by the lateral acceleration;
- said gain setting means being adapted to change the ratio of the front and rear gain control signal in response to the steering angle, for accordingly varying said front and rear gain.

Since the gain is changed by the variation of the according gain control signal, easy and precise variation of the suspension characteristic is possible simply by appropriately setting the gain control signal. This setting can be made manually or automatically, for example depending on the steering angle.

Preferred embodiments of the invention are described in the subclaims.

Fig. 1 is a diagrammatic illustration showing the overall construction of the preferred embodiment of an automotive suspension system with a control system actively controlling the suspension system according to the present invention;

Fig. 2 is a section of one example of a hydraulic cylinder in combination with a hydraulic pressure control valve associated with the shock absorber for adjusting stiffness of the latter;

Figs. 3(A) and 3(B) are enlarged sections showing the detail of the hydraulic pressure control valve of Fig. 2, in which, Fig. 3(A) shows the valve position softening the shock absorber and Fig. 3(B) shows the valve position hardening the shock absorber;

Fig. 4 is a graph showing variation of a hydraulic pressure to be supplied to a pressure control value according to variation of drive suspension control signal;

Fig. 5 is a diagramatic illustration of the preferred embodiment of one of the active suspension systems employed in the preferred embodiment of the actively controlled suspension system according to the invention;

Fig. 6 is a block diagram of the preferred embodiment of a controller in the active suspension control system according to the invention, which control circuit adjusts rolling-stability of the suspension system;

Fig. 7 is a chart showing distribution of the roll-stabilizing hydraulic pressure to be built-up in the front and rear suspension systems;

Fig. 8 is a graph showing variation in a gain with respect to a gain control signal;

Fig. 9 is an explanatory illustration to be utilized for discussion of the roll-stabilizing operation of the preferred embodiment of the actively controlled suspension system;

Fig. 10 is an illustration showing an equivalent model of the preferred embodiment of the actively controlled suspension system accroding to the invention,

Fig. 11 is a block diagram of a lateral acceleration projecting means to be employed in the preferred embodiment of the actively controlled suspension system according to the invention;

Fig. 12 is a graph showing relativeship between the ratio of projected lateral acceleration and actual steering angle, and the vehicle speed;

Figs. 13(a) and 13(b) show response characteristics with respect to vibration frequency in represented by the relationship between G\δ ratio and the vibration frequency; and

Fig. 14 is a block diagram of a modified embodiment of the actively controlled suspension system according to the invention.

## DESCRIPTION OF THE PREFERRED EMBODIMENT

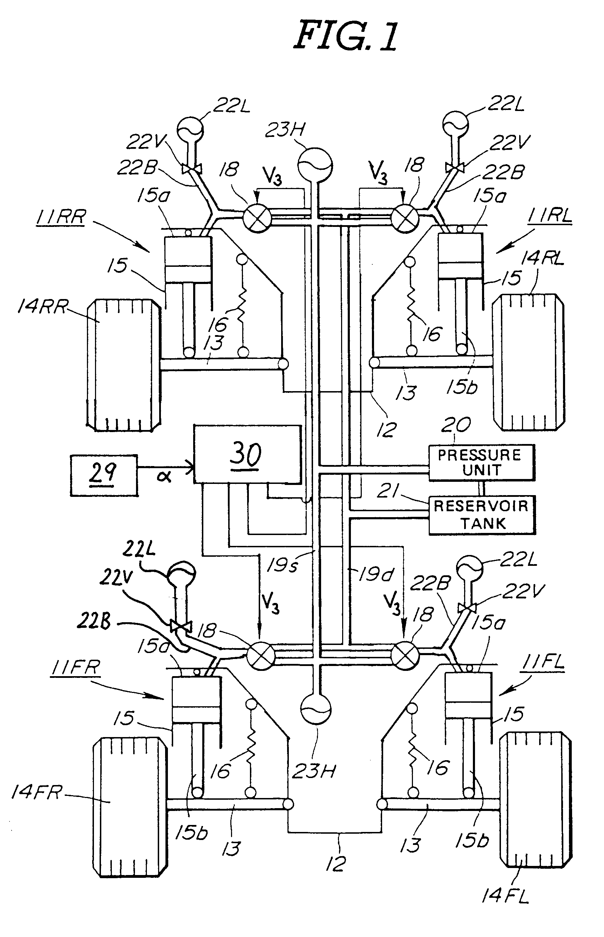

Referring now to the drawing, particularly to Fig. 1, a vehicle has four suspension systems 11FL, 11FR, 11RL and 11RR for respectively suspending vehicle body 12 on front-left, front-right, rear-left and rear-right road wheels 14FL, 14FR, 14RL and 14RR. Each of the front-left, front-right, rear-left and rear-right suspension systems 11FL, 11FR, 11RL and 11RR are constructed to form so-called active suspension system which adjusts working fluid pressure in the suspension system for adjusting stiffness and damping characteristics of the suspension system in positive manner for absorbing discomfortable relatively high frequency and relatively small magnitude vibration input from the road wheels 14FL, 14FR, 14RL and 14RR and suppressing attitude change of a vehicle body.

Each suspension system 11FL, 11FR, 11RL and 11RR comprises a suspension member 13, such as a suspension link, a suspension arm and so forth, and a suspension assembly 15 which is interposed between the vehicle body 12 and the suspension member 13. The suspension assembly 15 has a hydraulic cylinder 15A which serves as an actuator, and a coil spring 16. In the shown embodiment, the suspension coil spring 16 is not necessary to damp the bounding and rebounding kinematic energy and is required only to resiliently support the vehicle body on the road wheel resisting the static load due to the mass weight of the vehicle body. On the further positive side, the suspension coil spring 16 should be weak enough not to produce a damping force against vibrations to be transmitted between the vehicle body and the suspension member.

The hydraulic cylinder 15A has a hollow cylinder housing 15a filled with a viscous working fluid and a piston 15c sealingly and thrustingly disposed within the internal space of the cylinder housing to divide the cylinder space into upper and lower fluid chambers 15d and 15e. A piston rod 15b extends through one end of the cylinder houisng 15a. The other end of the cylinder housing 15a is connected to one section of the vehicle body 12. The lower end of the piston rod 15b is connected to the suspension member 13. Therefore, the piston 15c is thrustingly movable in bounding and rebounding directions relative to the cylinder housing 15a according to relative displacement between the vehicle body and the suspension member.

The hydraulic cylinder 15A of the suspension assembly 15 is connected to a hydraulic pressure source unit 20 via a hydraulic circuit which includes pressure control valve 18. The pressure control valve 18 employed in the shown embodiment is provided with an actuator electrically operable according to a suspension control signal and connected to a controller 30 to receive the suspension control signal therefrom. The hydraulic circuit includes a supply line 19s and a drain line 19d. High pressure accumulators 23H are connected to the supply line 19s and low pressure accumulators 22L are connected between the pressure control valves 18 and the associated hydraulic cylinder 15A. The pressure source unit comprises a pressure unit 20 and a reservoir tank 21. The pressure unit 20 is connected to the reservoir tank 21 to suck the viscous working fluid in the reservoir tank 21 to feed to the pressure control valve 18 via the supply line 19s. On the other hand, the drain line 19d is connected to the reservoir 21 to return the working fluid thereto.

As seen from Fig. 1, the low pressure accumulators 22L are connected to a branch pressure line 22B connected to the communication path 27 between the pressure control valves 18 and the upper fluid chambers 15d of the hydraulic cylinder 15A. A throttle valve 22V is inserted between the junction of the branch pressure line 22B and the communication path 27 and the low pressure accumulator 22L. The throttle valve 22V has a fixed throttling rate to provide a predetermined flow resistance against the working fluid flow therethrough.

The controller 30 is connected to a lateral acceleration sensor 29. The lateral acceleration sensor 29 outputs a lateral acceleration indicative signal α. The controller 30 derives the suspension control signals for controlling respective pressure control valves 18 based on the lateral acceleration indicative signal α.

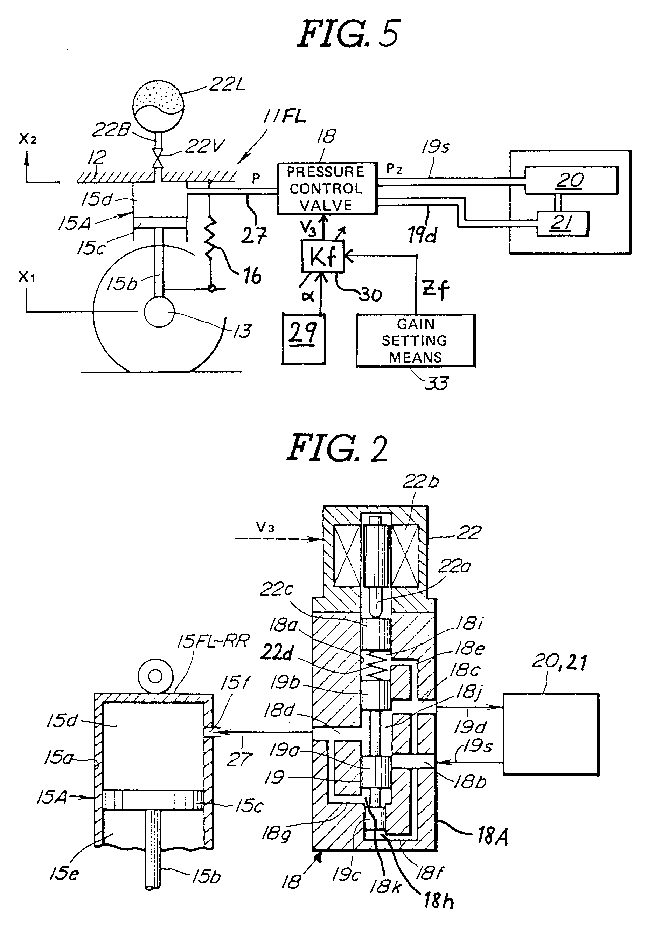

Figs. 2 and 5 show the detailed construction of the hydraulic cylinder 15A and the pressure control valve 18. As will be seen from Fig. 2, the hollow cylinder housing 15a is formed with a port 15f communicating the upper fluid chamber 15d to an outlet port 18d of the pressure control valve 18 via a communication line 27. The pressure control valve 18 has a valve housing 18A having the forementioned

EP 0 249 246 B1

outlet port 18d, an inlet port 18b and a drain port 18c. Respective inlet port 18b, the drain port 18c and the outlet port 18d are connected to a valve bore 18a defined within the valve housing 18A. A valve spool 19 is disposed within the valve bore 18a for thrusting movement therein. The valve spool 19 has first, second and third lands 19a, 19b and 19c. As will be seen from Fig. 2, the third land 19c has smaller diameter than that of the first and second lands 19a and 19b. The third land 19c defines a fifth pressure control chamber 18h which is connected to the drain port 18c via a drain path 18f. An actuator piston 22c is also disposed within the valve bore 18a. The actuator piston 22c opposes the second land 19b in spaced apart relationship to define a second pressure control chamber 18i which is connected to the drain port 18c via a drain path 18e. An annular pressure chamber 18j is defined between the first and second lands 19a and 19b. The pressure chamber 18j is constantly communicated with the outlet port 18d and thereby communicated with the upper fluid chamber 15d. On the other hand, the pressure chamber 18j shifts according to shifting of the valve spool 19 to selectively communicate with the inlet port 18b and the drain port 18c. A pressure control chamber 18k is defined between the first and third lands 19a and 19c. The presure control chamber 18k is in communication with the outlet port 18d via a pilot path 18g. A bias spring 22d is interposed between the actuator piston 22c and the valve spool 19. The spring force of the bias spring 22d balances with the hydraulic pressure in the pressure control chamber 18k to determine the valve spool position. The actuator piston 22c contacts an actuator rod 22a of an electrically operable actuator 22 which comprises an electromagnetic solenoid. The solenoid 22 is a proportioning solenoid which varies the magnitude of actuation of the actuator rod 22a to determine the valve spool position.

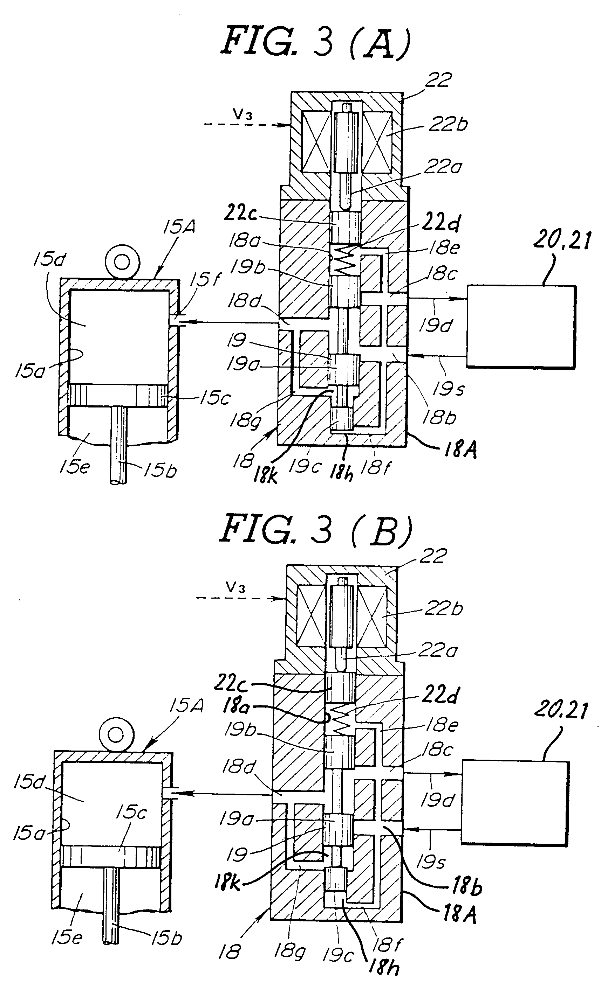

In order to increase the supply pressure of the working fluid, the spool valve 19 is shifted to the position shown in Fig. 3(A) to increase path area at a throttle at the inner end of the inlet port 18b by means of the land 19a of the spool valve 19. On the other hand, in order to decrease the supply pressure of the working fluid, the spool valve is shifted to the position shown in Fig. 3(B) to decrease the path area at the throttle of the inner end of the inlet port 18b and opens the drain port 18c which is normally blocked by means of the land 19b of the spool valve.

Construction of the pressure control valves should not be restricted to the construction as illustrated in Figs. 2, 3(A) and 3(B) but can be relaced with any appropriate constructions. For example, the pressure control valve constructions as illustrated in European Patent First Publication 01 93 124 set forth above, can also be employed. The disclosure of the aforementioned European Patent First Publication 01 93 124 is herein incorporated by reference for the sake of disclosure.

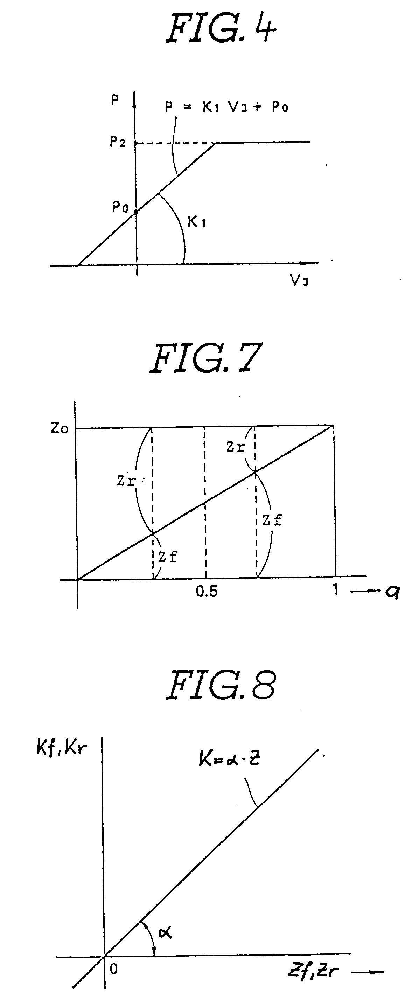

As seen from Fig. 2, the proportioning solenoid 22 comprises the actuator rod 22a and a solenoid coil 22b. The solenoid coil 22b is energized by a suspension control signal $V_3$ from the controller 30. The magnitude of energization is variable depending upon the signal level of the suspension control signal. Therefore, the proportioning solenoid 22 shifts the actuator rod in a magnitude proportional to the suspension control signal level. In the shown embodiment of the pressure control valve, the working fluid pressure P at the outlet port 18d is variable according to the characteristics shown in Fig. 4. Namely, when the suspension control signal $V_3$ is zero, the pressure P at the outlet port 18 becomes $P_0$ determined according to a predetermined offset pressure $P_0$. When the suspension control signal value increases, the fluid pressure P at the outlet port 18d increases with a predetermined proportioning gain $K_1$. Namely, by increasing of the suspension control value $V_3$, the actuator rod 22a is driven downwardly in Fig. 2 to the position of Fig. 3(A) to achieve increasing of the fluid pressure with the predetermined proportioning gain $K_1$. The fluid pressure P at the outlet port 18d is at the output pressure $P_2$ of the pressure unit 20. On the other hand, when the suspension control signal value $V_3$ decreases, the pressure P decreases to zero by shifting of the actuator rod 22a toward the direction shown in Fig. 3(B).

The actuator rod 22a of the proportioning solenoid 22 is associated with the actuator piston 22c. Contact between the actuator rod 22a and the actuator piston 22c can be maintained by the resilient force of the bias spring 22d which normally biases the actuator piston toward the actuation rod. On the other hand, the spring force of the bias spring 22d is also exerted on the valve spool 19 to constantly bias the valve spool downwardly in Fig. 2. The valve spool 19 also receives upward hydralic force from the pressure control chamber 18k. Therefore, the valve spool 19 is oriented at the position in the valve bore at the position where the downward bias of the bias spring 22d balances with the upward hydraulic force of the pressure control chamber 18k.

Here, the communication path 27, the outlet port 18d, the fluid chamber 15d of the hydraulic cylinder 15A and the pressure control valve 18 constitute a first hydraulic system. On the other hand, the low pressure accumulator 22L, the branch line 22B and the throttle valve 22V constitute a second hydraulic system with the fluid chamber 15d of the hydraulic cylinder 15A. The length and diameter of the pipe forming the communication path 27 is so selected as to generate a resistance against the working fluid flow therethrough. The flow resistance varies according to input vibration frequencywhich corresponds to the

6

stroke speed of the piston 15c of the hydraulic cylinder 15A in non-linear fashion. More practically, the variation characteristics of the flow resistance in the communication path 27 is parabolic in relation to the vibration frequency. Furthermore, the flow resistance of the communication path is set smaller than the flow resistance in the second hydraulic system set forth above, when the input vibration frequency is lower than a border frequency, (e.g. 7 to 8 HZ) between the resonance frequency of the vehicle body and the resonance frequency of the suspension member as coupled with the road wheel. On the other hand, the flow resistance value of the communication path is set greater than or equal to the flow resistance in the second hydraulic system set forth above, when the input vibration frequency is higher than or equal to the border frequency.

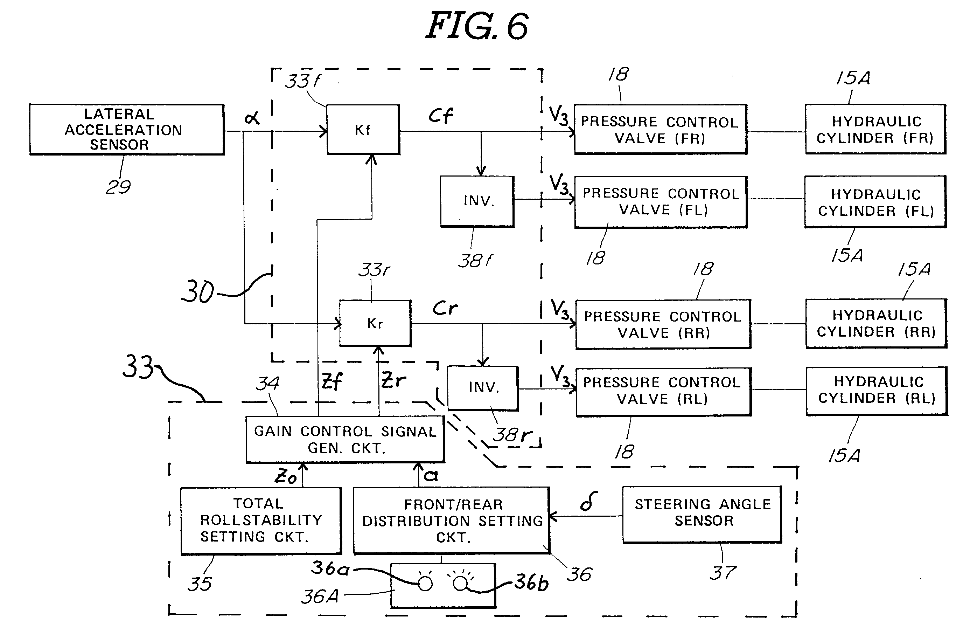

On the other hand, Fig. 6 shows the preferred embodiment of the controller 30 for controlling the actively controlled syspension system of Fig. 1.

As seen from Fig. 6, the controller 30 includes control signal generator circuits 33f and 33r, and inverter circuits 38f and 38r. As will be seen from Fig. 6, the control signal generator circuit 33f is designed for outputting a control signal for controlling the pressure control valves 18 in the front-left and front-right suspension systems 11FL and 11FR, which is, therefore, referred to as 'front suspension control signal Cf'. Similarly, the control signal generator circuit 33r is designed for outputting the control signal for controlling the pressure control valves 18 in the rear-left and rear-right suspension systems 11RL and 11RR, which will be hereafter referred to as 'rear suspension control signal Cr'.

The control signal generator circuits 33f and 33r comprise gain-controlled amplifiers respectively having variable gains Kf and Kr. On the other hand, the control signal generator circuits 33f and 33r are connected to a gain control signal generator circuit 34 which is, in turn connected to a total roll-stability setting circuit 35, and to a front/rear distribution setting circuit 36. The front/rear distribution setting circuit 36 is connected to a steering angle sensor 37 and a manual selector unit 36A which includes a mode selector switch 36a and a manual set switch 36b. The gain control signal generator circuit 34, the total roll-stability setting circuit 35, the front/rear distribution setting circuit 36, the steering angle sensor 37, and the manual selector unit 36A are parts of a gain setting means 33. In the preferred construction, the total roll-stability setting circuit 35 includes a manual selector switch provided adjacent the driver's seat in the vehicle cabin so that the driver may be able to reach for setting the desired overall stiffness of the suspension systems and thereby setting the total roll-stability. The total roll-stability setting circuit 35 outputs a set total roll-stability indicative signal $Z_0$ to the gain control signal generator circuit 34.

On the other hand, the front/rear distribution setting circuit 36 receives a mode selector signal from the manual selector unit 36A. In practice, the mode selector switch 36a of the manual selector unit 36A is operable for mannually selecting one of an AUTO mode and the MANUAL mode. The manual set switch 36b is operable when the mode selector switch 36a is set at MANUAL mode position for setting front/rear distribution of the roll-stability. In the AUTO mode as selected by means of the mode selector switch 36a, the front-rear distribution setting circuit 36 is active to automatically adjust the front/rear distribution of the roll-stability in accordance with a predetermined front/rear distribution adjusting parameter. In the shown embodiment, the steering angle $\delta$ is taken as the front/rear distribution adjusting parameter. Therefore, the front/rear distribution setting circuit 36 is connected to the steering angle sensor 37 to receive therefrom a steering angle signal. The steering angle sensor 37 may have per se well known construction and may comprise a photoelectric sensor, a potentiometer and so forth.

It should be appreciated that though the steering angle sensor 37 is employed in the shown embodiment as a sensor for detecting vehicular rolling condition and as the front/rear distribution adjusting parameter detecting means, it would be possible to employ other sensors which can satisfactorily detect vehicular rolling condition, such as a lateral acceleration sensor, a lateral force sensor and so forth. Furthermore, the manual selector unit 36A may be provided adjacent the driver's seat so that the driver may easily reach the same.

The front/rear distribution setting circuit 36 derives front/rear distribution based on the inputs from the manual selector unit 36A and the steering angle sensor 37. The front/rear distribution setting circuit 36 outputs a front/rear distribution indicative signal a to the gain control signal generator circuit 34.

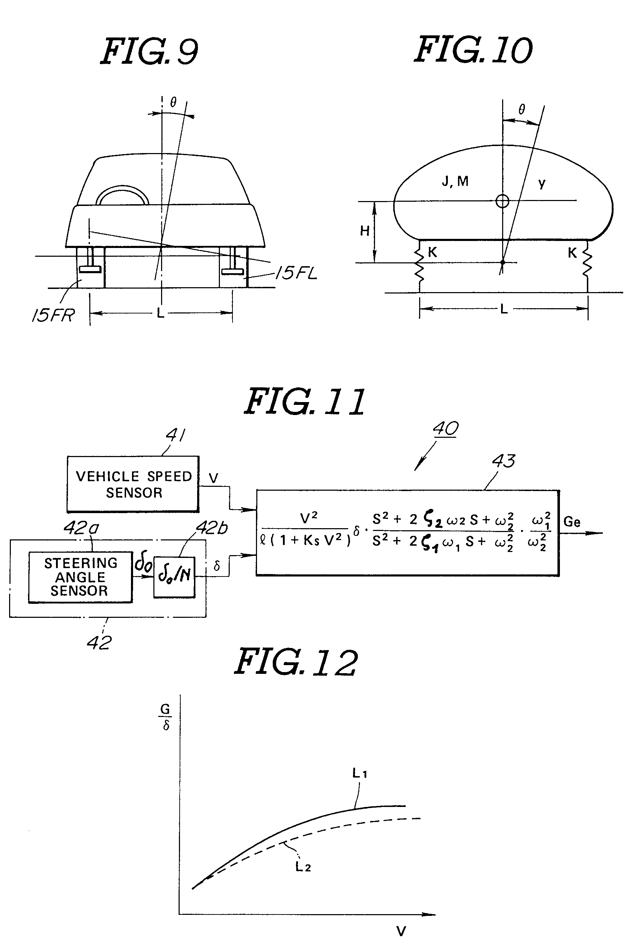

The gain control signal generator circuit 34 is responsive to the total roll-stability indicative signal $Z_0$ and the front/rear distribution indicative signal a to derive gain control signals Zf and Zr. The gain control signal Zf to be transmitted to the front suspension control signal generator circuit 33f for determining the amplifier gain Kf, which gain control signal for adjusting the amplifier gain Kf in the front suspension control signal generator circuit will be hereafter referred to as 'front gain control signal'. On the other hand, the gain control signal Zr is transmitted to the rear suspension control signal generator circuit 33r for determining the amplifier gain Kr, which gain control signal will be hereafter referred to as 'rear gain control signal'. In practical operation, the front/rear distribution setting circuit 36 processes the manually set value indicative signal from the manual set switch 36b in the manual selector unit 36A as the mode selector switch 36a is set in MANUAL mode position, the mode selector signal from the mode selector switch 36a and the steering angle signal δ from the steering angle sensor 37. When the MANUAL mode is selected through the mode selector switch 36a, the maually set value as represented by the manually set value indicative signal is output from the front/rear distribution setting circuit 36 as the front/rear distribution indicative signal a. On the other hand, when the AUTO mode is selected, the front/rear distribution setting circuit 36 derives the front/rear distribution indicative signal a according to the vehicular steering condition, automatically. In practice, the front/rear distribution setting circuit 36 sets the front/rear distiribution indicative signal a at a predetermined initial value which is greater than or equal to 0.5, while the vehicle travels straight. On the other hand, the front/rear distribution setting circuit 36 is responsive to initiation of the vehicular steering operation which is detected by monitoring a change of the steering angle signal δ, to set the front/rear distribution indicative signal a at a value in a range of 0 to 0.5. The front/rear distribution setting circuit 36 is also responsive to termination of the vehicular steering operation which is detected by monitoring a change of the steering angle signal δ, to set the front/rear distribution value a at a value in a range of 0.5 to 1. The relationship of the front and rear gain control signal values Zf and Zr with respect to the front/rear distribution indicative signal a may be seen from Fig. 7.

The gain control signal generator circuit 34 receives the total roll-stability indicative signal $Z_0$ from the total roll-stability setting circuit 35 and the front/rear distribution indicative signal a from the front/rear distribution setting circuit 36. The gain control signal generator circuit 34 processes the inputs, i.e. $Z_0$ and a to derive the front gain control signal Zf and the rear gain control signal Zr according to the following equations:

$$Zf = a \times Z_0 \qquad (1)$$

$$Zr = Z_0 - Zf \qquad (2)$$

The front suspension control signal generator circuit 33f receives the lateral acceleration indicative signal a from the lateral acceleration sensor 29. The front suspension control signal generator circuit 33f also receives the front gain control signal Zf from the gain control signal generator circuit 34. The front suspension control signal generator circuit 33f determines the amplifier gain Kf according to the front gain control signal value Zf (for example as shown in Fig. 8) and amplifies the acceleration indicative signal value α by the determined gain Kf in order to derive the front suspension control signal Cf. The front suspension control signal Cf is fed to the proportioning solenoid 22 of the pressure control valve 18 in the front-right suspension system 11FR. The front suspension control signal Cf is also fed to the proportioning solenoid 22 of the pressure control valve in the front-left suspension system 11FL via the inverter circuit 38f. Therfore, the different polarity of the front suspension control signals Cf are input to the solenoids 22 of the pressure control valves 18 in the front-right and front-left suspension systems 11FR and 11FL.

The rear suspension control signal generator circuit 33r receives the lateral acceleration indicative signal α from the lateral acceleration sensor 29. The rear suspension control signal generator circuit 33r also receives the rear gain control signal Zr from the gain control signal generator circuit 34. The rear suspension control signal generator circuit 33r determines the amplifier gain Kr according to the rear gain control signal value Zr, (see Fig. 8) and amplifies the lateral acceleration indicative signal α with the determined gain Kr in order to derive the rear suspension control signal Cr. The rear suspension control signal Cr is fed to the proportioning solenoid 22 of the pressure control valve 18 in the rear-right suspension system 11RR. The rear suspension control signal Cr is also fed to the proportioning solenoid 22 of the pressure control valve in the rear-left suspension system 11RL via the inverter circuit 38f. Therfore, the different polarity of the rear suspension control signals Cr are input to the solenoids 22 of the pressure control valves 18 in the reart-right and rear-left suspension systems 11RR and 11RL.

Assuming the load distribution at respective road wheels 14FL 14FR, 14RL and 14RR are even, characteristics of respective hydraulic cylinders 15A, of the loop-gains of the hydraulic pressure control circuits and of coil springs are same, distribution of the rolling stability at the front and rear suspension systems can be controlled by adjusting the fluid pressures in the hydraulic cylinders according to the front and rear suspension control signals Cf and Cr. By controlling the roll-stability distribution at the front and rear suspension systems, vehicular steering characteristics can be adjusted.

Namely, when the front suspension control signal Cf has a greater value than the rear suspension control signal Cr, the roll-stabilization load at the front suspension systems 11FL and 11FR becomes greater than that at the rear suspension systems 11RL and 11RR. This causes reducing the relativ cornering force as a total cornering force of the front-left and front right suspension systems 11FL and 11FR at the front suspension systems to be smaller than that in the rear suspension systems. This increases cornering factor Ks to increase under-steering characteristics of the vehicle. On the other hand, when the rear suspension control signal Cr has a greater value than the front suspension control signal Cf, the roll-stabilization load at the rear suspension systems 11RL and 11RR becomes greater than that of the front suspension systems 11FL and 11FR. This causes reducing the relativ cornering force as a total cornering force of the rear-left and rear-right suspension systems 11RL and 11RR at the rear suspension systems to be smaller than that in the front suspension systems. This decreases cornering factor Ks to increase over-steering characteristics of the vehicle.

Operation of the preferred embodiment of the actively controlled suspension system according to the invention will be described herebelow.

At first, it will be appreciated when the front suspension control signal value Cf is substantially the same as the rear suspension control signal value Cr, the roll-stabilization load distribution at front and rear suspension systems becomes even to provide substantially neutral steering characteristics.

As will be appreciated, in general, the resonance frequency of the suspension member with the road wheel is higher than the resonance frequency of the vehicle body. Therefore, when the vibration is input from the suspension member, the vibration frequency is usually higher than the boader frequency. On the other hand, when the vehicle body causes rolling, pitching, bouncing or so forth to input vibration, the vibration frequency is lower than the boader frequency. Since the flow resistance of the communication path 27 becomes greater than that of the second hydraulic system when the vibration is input from the suspension member. Therefore, in this case, the second hydraulic system becomes active to absorb vibration energy. On the other hand, when the vibration frequency is lower than the boader frequency during vehicular attitude change, such as vehicular rolling, pitching and bouncing and so forth, the first hydraulic system is active to adjust the fluid pressure in the fluid chamber 15d to suppress attitude change of the vehicle body.

For example, when bounding motion occurs at the suspension member, the piston 15c of the hydraulic cylinder 15A shifts upwardly to cause increasing of the fluid pressure in the upper chamber 15d. Since the input vibration frequency is higher than the boarder frequency, the increased pressure is introduced into the low pressure accumulator 22L through the throttle valve 22V because the second hydraulic circuit has a lower flow resistance than the first hydraulic circuit. In this case, the throttle valve generates damping force against the piston stroke to successfully prevent the vibration energy input from the suspension member from being transmitted to the vehicle body.

Therefore, in response to the bounding motion of the suspension member causing increasing of the fluid pressure in the fluid chamber 15d, the pressurized fluid flows from the fluid chamber 15d to the low pressure accumulator 22L via the branch line 22B and the throttle valve 22V. Since the throttle valve 22V has a given throttling rate to limit fluid flow therethrough, this flow resistance serves as damping force for absorbing vibration energy so that the vibration energy is not transmitted to the vehicle body.

While the vehicle travels steadily as set forth above and assuming the AUTO mode is selected through the mode selector switch 36a of the manual selector unit 36A, the lateral acceleration sensor 29 provides a lateral acceleration signal $\alpha$ which represents zero lateral acceleration. As a result, the front and rear suspension control signals Cf and Cr become substantially zero. Therefore, the solenoid coils 22a of the proportioning solenoids 22 of the pressure control valves 18 are held deenergized to maintain the fluid pressure in the fluid chambers 15d of respective hydraulic cylinders 15A at the initial offset pressure $P_0$. At this condition, the aforementioned first hydraulic systems in respective suspension systems are active for absorbing the road shock and other relatively high frequency vibrations.

In the alternative, it would be possible to avoid the first hydraulic system and absorb the road shock and so forth by the action of the valve spool 19 in response to pressure variation in the pressure control chamber 18K. Namely in this case, when bounding motion occurs at the suspension member, the piston 15c of the hydraulic cylinder 15A shifts upwardly to cause increasing of the fluid pressure in the upper chamber 15d. This causes increasing of the fluid pressure at the outlet port 18d of the pressure control valve 18. As a result, the fluid pressure in the pressure control chamber 18k increases by the pressure introduced through the pilot path 18g to destroy the balance between the downward bias of the bias spring 22d and the upward hydraulic force of the pressure control chamber 18k. This causes upward movement of the valve spool 19 against the spring force of the bias spring 22d, as shown in Fig. 3(B). As a result, path area of the drain port 18c increases and the inlet port 18b becomes being blocked. Therefore, the fluid pressure in the fluid chamber 15d is drained through the drain port. Therefore, the increased fluid pressure in the fluid chamber 15d of the hydraulic cylinder 15A can be successfully absorbed so that the bounding energy input from the suspension member will not be transmitted to the vehicle body. On the other hand, when rebounding motion occurs at the suspension member, the piston 15c of the hydraulic cylinder 15A shifts downwardly to cause decreasing of the fluid pressure in the upper chamber 15d. This causes decreasing of the fluid pressure at the outlet port 18d of the pressure control valve 18. As a result, the fluid pressure in the pressure control chamber 18k decreases by the pressure introduced through the pilot path 18g to destroy the balance between the downward bias of the bias spring 22d and the upward hydraulic force of the pressure control chamber 18k. This causes downward movement of the valve spool 19 against the spring force of the bias spring 22d, as shown in Fig. 3(A). As a result, path area of the inlet port 18b increases and the drain port 18c becomes being blocked. Therefore, the fluid pressure in the fluid chamber 15d is increased by the pressure introduced through the inlet port. Therefore, the decreased fluid pressure in the fluid chamber 15d of the hydraulic cylinder 15A can be successfully absorbed so that the rebounding energy input from the suspension member will not be transmitted to the vehicle body.

If steering operation is performed for making left-hand turn, the vehicle body rolls to lower the left side and to lift-up the right side due to lateral force exerted on the vehicle body because of the presence of the centrifugal force so that the vehicle body inclines toward left with an angle $\theta$ with respect to the vertical plane, as shown in Figs. 5, 9 and 10. Therefore, the lateral acceleration sensor 29 outputs the lateral accleration indicative signal $\alpha$. If the front suspension systems are concerned, the fluid pressures in the hydraulic cylinders 15A of the front-left and front-right suspension systems 11FL and 11FR are determined according to the following process.

Assuming the mass weight of the vehicle body is M. the effective area of the hydraulic cylinder 15A of the front-left and front-right suspension system is A, and the fluid pressure variation gain in the pressure control valve 18 is $K_1$, the variation magnitude of the fluid pressure in the hydraulic cylinder in response to the front suspension control signal Cf may be illustrated by the following equation (3):

$$P - P_0 = K_1 \times Cf \qquad (3)$$

Here, setting the $(P - P_0)$ as $\Delta P$, the foregoing equation can be rewritten as the following equation (4):

$$\Delta P = K_1 \times Cf \qquad (4)$$

Since the hydraulic force to be generated in each cylinder is A (effective area) x $\Delta P$, the rolling moment $M\ddot{x}_2$ can be illustrated by the following equation:

$$M\ddot{x}_2 = A \ \times \ \Delta P \ + \ K(x_2 \ - \ x_1) \ \ldots \ (5)$$

where     $x_2$ is the displacement of the vehicle body;
            $x_1$ is the displacement of the suspension member; and
            K is a spring coefficient of the coil spring 16.

Since the front suspension control signal value Cf is derived by $(Kf \times \alpha)$, the foregoing equation (5) can be modified as:

$$M\ddot{x}_2 \ + \ K(x_2 \ - \ x_1) \ = \ K_1 \ \times \ Cf \ \times \ A \ \ldots \ (6)$$

Assuming the magnitude $x_1$ of the displacement of the suspension member is zero, the magnitude $x_2$ of the displacement of the vehicle body can be illustrated in a form of vibration transmission coefficient by the following equation (7) with Laplace conversion:

$$x_2/Cf = (K_1 \times A)/(MS^2 + K) \qquad (7)$$

Therefore the vibration transmission coefficeint $(x_2/\alpha)$ can be illustrated by the following equation (8):

$$x_2/\alpha = (K_1 \times Ax \ Kf)/MS^2 + K) \qquad (8)$$

On the other hand, Fig. 9 shows the vehicle to which anti-roll suspension control is not effected. In this case, the rolling motion of the vehicle body can be illustrated by the following equation (9):

$$J\ddot{\theta} + K \times (L^2/2) \times \theta = M \times H \times \alpha \quad \ldots \quad (9)$$

where

J is a rolling inertia moment;

$\theta$ is a rolling angle;

H is a distance between the gravity center and roll center;

K is a spring coefficent;

L is a tread distance.

The foregoing equation (9) can be modified as:

$$\theta/\alpha = (M \times H)/(JS^2 + KL^2/2) \quad (10)$$

Since $x_2$ is $(L\theta/2)$, the foregoing equation (10) can be further modified as:

$$x_2/\alpha = (L \times H \times M/2)/(JS^2 + KL^2/2) \quad (11)$$

As will be appreciated the foregoing equation (8) illustrates the response characteristics of the hydraulic system of the shown embodiment and the equation (11) illustrates the rolling motion of the vehicle body in response to the lateral acceleration. Therefore, as will be seen from the equations (8) and (11), the rolling motion of the vehicle body can be dynamically suppressed by setting the amplifier gain kf appropriately.

This can be regarded as substantially equivalent to the roll-stabilizing force to be created by the conventional roll-stabilizers.

On the other hand, upon initiation of the steering operation, the front/rear distribution setting circuit 36 detects the fact based on variation of the steering angle signal from the steering angle sensor 37. As set forth, since the Auto mode is selected, the front/rear distribution setting circuit 36 sets the front/rear distribution indicative value a within a range of 0 to 0.5 for a given period of time. Therefore, the front gain control signal Zf to be fed to the front suspension control signal generator circuit 33f becomes smaller than the rear suspension control signal Zr which is to be fed to the rear suspension control signal generator circuit 33r. Therefore, the front amplifier gain Kf of the front suspension control signal generator circuit 33f becomes smaller than the rear amplifier gain Kr of the rear suspension control signal generator 33r. Assuming the rolling magnitude at front suspension systems 11FL and 11FR and the rear suspension systems 11RL and 11RR are the same, the fluid pressure variation ΔP in the front suspension systems becomes smaller than that of the rear suspension systems. This increases over-steering characteristics of the vehicle to provide better turning ability.

In the practicel suspension control for the front suspension systems 11FL and 11FR, the front suspension control signals Cf which becomes the negative value, is fed to the proportioning solenoid 22 of the pressrue control valve 18 in the front-left suspension system 11FL via the inverter 38f. Therefore, the proportioning solenoid 22 becomes active to operate the pressure control valve 18 in the front-left suspension system to increase the fluid pressure in the front-left suspension system to rise the left side of the vehicle body toward the neutral position. On the other hand, the negative value of front suspension control signals Cf is directly fed to the proportioning solenoid 22 of the pressrue control valve 18 in the front-right suspension system 11FR. Therefore, the proportioning solenoid 22 becomes active to operate the pressure control valve 18 in the front-right suspension system to decrease the fluid pressure in the front-right suspension system to lower the right side of the vehicle body toward the neutral position. Therefore, the vehicle rolling can be successfully suppressed.

Similarly, the rear suspension control signal Cr which is derived substantially the same manner as that for the front suspension control signal and has greater absolute value than that of the front suspension control signal. The rear suspension control signals Cr which becomes the negative value, is fed to the proportioning solenoid 22 of the pressrue control valve 18 in the rear-left suspension system 11RL via the inverter 38r. Therefore, the proportioning solenoid 22 becomes active to operate the pressure control valve 18 in the rear-left suspension system to increase the fluid pressure in the rear-left suspension system to raise the left side of the vehicle body toward the neutral position. On the other hand, the negative value of rear suspension control signals Cr is directly fed to the proportioning solenoid 22 of the pressrue control valve 18 in the rear-right suspension system 11RR. Therefore, the proportioning solenoid 22 becomes active to operate the pressure control valve 18 in the rear-right suspension system to decrease the fluid pressure in the rear-right suspension system to lower the right side of the vehicle body toward the neutral position. Therefore, the vehicle rolling can be successfully suppressed.

On the other hand, upon termination of the steering operation, the front/rear distribution setting circuit 36 detects the fact based on variation of the steering angle signal from the steering angle sensor 37. As set forth, since the Auto mode is selected, the front/rear distribution setting circuit 36 sets the front/rear distribution indicative value a within a range of 0.5 to 1 for a given period of time. Therefore, the front gain control signal Zf to be fed to the front suspension control signal generator circuit 33f becomes greater than the rear suspension control signal Zr which is to be fed to the rear suspension control signal generator circuit 33r. Therefore, the front amplifier gain Kf of the front suspension control signal generator circuit 33f becomes greater than the rear amplifier gain Kr of the rear suspension control signal generator 33r. Assuming the rolling magnitude at front suspension systems 11FL and 11FR and the rear suspension systems 11RL and 11RR are the same, the fluid pressure variation ΔP in the front suspension systems becomes greater than that of the rear suspension systems. This increases under-steering characteristics of the vehicle to provide better stability.

Therefore according to the shown embodiment, the active suspension system according to the present invention, exhibits roll-stabilization ability equivalent to the conventional mechanical roll-stabilizer. In addition to this, the shown embodiment of the acvtive suspension system can provide improved cornering characteristics with variation of the steering charcateristics during cornering.

In addition, the shown embodiment is provided capability of manually setting the front/read distribution value in MANUAL mode, steering characteristics fitting the driver's taste can be selected.

Fig. 11 shows a modified embodiment of the actively controlled suspension system according to the invention. In this embodiment, the lateral acceleration sensor 29 is replaced with a lateral acceleration projecting means 40. This is intended to avoid influence of the lateral acclleeration generated due to vehicular rolling to perform anti-rolling active suspension control purely depending on the lateral acceleration externally exerted on the vehicle body due to the centrifugal force generated by cornering. In addition, by utilizing the lateral acceleration projecting means 40, self-excited vibration which otherwise occurs in the lateral acceleration sensor 29 when the sensitivity is increased, can be avoided.

In the shown embodiment, the lateral acceleration projecting means 40 comprises a vehicle speed sensor 41, a steering condition detecting means 42 which includes a steering angle sensor 42a and an actual steering angle derivation circuit 42b, and an arithmetic circuit 43. The vehicle speed sensor 41 monitors the vehicle travelling speed to produce a vehicle speed indicative signal V. In practice, the vehicle speed sensor 41 is designed to monitor rotation speed of a power transmission output shaft. A transmission output shaft reference position indicative pulse is produced at every predetermined angular position of the transmission output shaft. The transmission output shaft reference position indicative pulse is counted to derive the vehicle speed value based on the counter value in the given unit time. The steering angle sensor 42a monitors steering angular displacement to produce a steering angle signal $\delta_0$. The steering angle sensor 42a is connected to the actual steering angle derivation circuit 42b to feed the steering angle signal $\delta_0$. The actual steering angle derivation circuit 42b derives the actual steering angle $\delta$ based on the steering angle signal value and a known steering gear ratio N. in practice, the actual steering angle $\delta$ can be derived from the following equation:

$\delta = \delta_0/N$

Based on the above, the arithmetic circuit 43 performs calculation of an actual projected lateral acceleration $G_e$ according to the following eqaution (12):

$$G_e = \frac{V^2}{\ell(1+K_sV^2)}\delta \cdot \frac{S^2+2\zeta_2\omega_2 S+\omega_2^2}{S^2+2\zeta_1\omega_1 S+\omega_1^2} \cdot \frac{\omega_2^2}{\omega_1^2} \quad \cdots (12)$$

where

$$\zeta_1 = \frac{(C_1+C_2)I+(\ell_1^2 C_1+\ell_2^2 C_2)M}{2\ell\sqrt{IMC_1 C_2(1+K_sV^2)}}$$

12

$$\zeta_2 = \frac{b}{2V} \sqrt{\frac{\ell\,C_2}{I}}$$

$$\omega_1 = \frac{\ell}{V} \sqrt{\frac{C_1\,C_2}{I\,M}\,(1+K_s V^2)}$$

$$\omega_2 = \sqrt{\frac{\ell\,C_2}{I}}$$

$C_1$ is a cornering force at the front wheel;

$C_2$ is a cornering force at the rear wheel;

$\ell$ is wheel base length;

$\ell_1$ is a distance between the front wheels and a gravity center;

$\ell_2$ is a distance between the rear wheels and a gravity center;

M is a mass weight of the vehicle;

I is yawing moment to be exerted on the vehicle;

$K_S$ is a stability factor;

S is a Laplace conversion coefficient;

$\zeta_1$, $\zeta_2$ are damping ratio; and

$\omega_1$ and $\omega_2$ are natural frequencies.

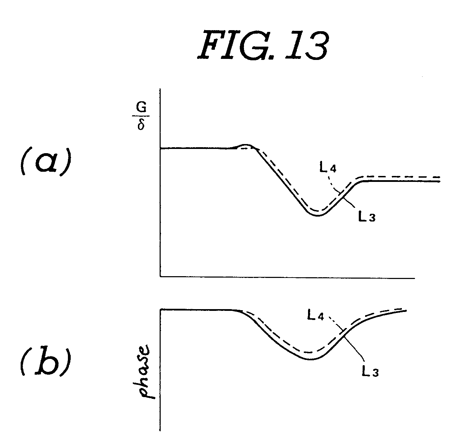

According to the foregoing equation (12), the relationship between the logarithm of the G/δ and the vehicle V can be illustrated as shwon by the solid line $L_1$ in Fig. 12. As will be seen herefrom, the variation characteristics of the solid line $L_1$ is equaivalent to that of the broken line $L_2$ which shows actually measured lateral force on the vehicle. On the other hand, the relationship between the frequency of the bounding and rebounding motion and G/δ ratio and the relationship between the bounding and rebounding frequency and the phase are shown by lines $L_3$ in Figs. 13(a) and 13(b). This becomes substially equivalent to those obtained in measurement of actual lateral acceleration as illustrated by the broken lines $L_4$. Therefore, according to the shown embodiment of the lateral acceleration projecting circuit 40, a proper projected lateral acceleration value Ge can be obtained with incorporating the factor of responsing ability to bounding and rebounding frequency.

Accordingly, by inputting the projected lateral acceleration value Ge to the control circuit 30 set forth above, substantially the same lateral acceleration dependent rolling suppressive or anti-rolling suspension control can be performed. In addition, since the steering angle sensor and the vehicle speed sensor are provided irrespective of the suspension control and the signals thereof can be used commonly to other vehicle equipment control, the cost for forming the suspension control can be lowered as that can neglect the lateral acceleration sensor. Furthermore, as set forth above, the shown embodiment can avoid the influence of the lateral acceleration caused by vehicular rolling. Furthermore, since the lateral acceleration dependent anti-rolling suspension control can be performed with an OPEN LOOP control system without utilizing FEEDBACK control system, self-excited hunting in the control system can be successfully avoided.

It will be appreciated that, when the lateral acceleration sensor is used for detecting lateral acceleration exerted on the vehicle, the lateral acceleration sensor will respond to the kinematic action of the portion of the vehicle body where the lateral acceleration sensor is provided. This action of the portion of the vehicle body is caused when the lateral acceleration is exerted and the vehicular rolling is indeed caused. Therefore, the control system is constituted as a FEEDBACK control system. In such FEEDBACK control system, detecting of the lateral acceleration delays. In order to compensate delay in detecting the lateral acceleration, rise sensitivity of the FEEDBACK system becomes necessary. For increasing the sensitivity of the FEEDBACK control system, the sensitivity of the lateral acceleration sensor has to be increased. This will cause instability of the FEEDBACK control system due to hunting caused in the sensor.

In addition, due to delay of detection of the lateral acceleration, the factor of lateral acceleration generated by rolling action of the vehicle body is incorporated in the detected lateral acceleration.

Acccording to, the shown embodiment, since the lateral acceleration to be exerted on the vehicle body is projected in terms of the vehicle speed and the steering angular displacement, no FEEDBACK loop becomes necessary to successfully avoid hunting in detection of the lateral acceleration. On the other hand, since the lateral acceleration can be projected before the vehicular rolling occurs actually, response ability of the suspension control becomes substantially high.

On the other hand, in case of the aforementioned second embodiment, the projected lateral acceleration value becomes greater than that of the actual value when lateral slip occurs on the vehicle. THis can be solved by additionally providing the lateral acceleration sensor 29 to the control system employing the lateral acceleration projecting circuit 40 of Fig. 11. In order to detect lateral slip of the vehicle, the projected acceleration value Ge is compared with the measured acceleration value $\alpha$ output from the lateral acceleration sensor 29. An absolute value of Ge/$\alpha$ is checked to judge whether lateral slip occurs or not. When the absolute value is close to "1", judgement is made that lateral slip does not occur. In this case, the projected lateral acceleration value Ge derived by the lateral acceleration projecting circuit 40 is used for suspension control. On the other hand, when the absolute value is substantially smaller than "1", judgement is made that lateral slip occurs. Then, damping rates $\zeta_1$ and $\zeta_2$ and natural frequencies $\omega_1$ and $\omega_2$ are corrected to derive the projected lateral acceleration with the corrected damping rates and natural frequencies.

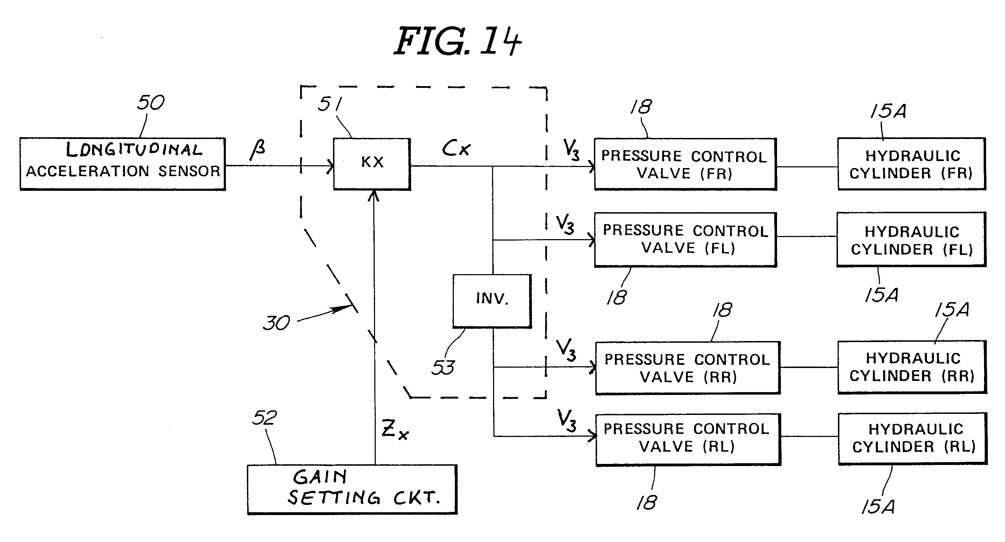

Fig. 14 shows the third embodiment of the active suspension control system according to the present invention. In this embodiment pitching suppressive active suspension control is performed utilizing a longitudinal acceleration sensor 50.

As seen from Fig. 14, the longitudinal acceleration sensor 50 is connecteed to a control circuit 30 which incoporates a longitudinal acceleration dependent suspension control signal generator circuit 51 and an inverter 53. The longitudinal acceleration sensor 50 is responsive to the vehicular longitudinal acceleration which causes lowering of the front and lifting up of the rear end, the longitudinal acceleration indicative signal $\beta$ becomes positive. On the other hand, the longitudinal acceleration indicative signal $\beta$ becomes negative when the longitudinal acceleration causes lowering of the rear end and lifting up at the front end. The longitudinal acceleration dependent suspension control signal generator circuit 51 is also connected to a gain setting circuit 52 to receive therefom a gain control signal Zx. The longitudinal acceleration dependent suspension control signal generator circuit 51 amplifies a longitudinal acceleration indicative signal $\beta$ from the longitudinal acceleration sensor 50, with a given pitching gain value Kx. The longitudinal acceleration dependent suspension control signal generator circuit 51 is connected to the solenoids 22 of the front-left and front-right pressure control valves 18. On the other hand the longitudinal acceleration dependent suspension control signal generator circuit 51 is connected to the solenoids 22 of the rear-left and rear-right pressure cotnrol valves 18 via the inverter 53. Therefore, to the solenoids 22 of the rear-left and rear-right pressure control valves 18, a longitudinal acceleration dependent suspension control signal Cx with opposite polarity to that applied to the solenoid valve 22 in the front-left and front right pressure control valves 18 is applied.

When vehicular pitching occurs, the longitudinal acceleration indicative signal $\beta$ is produced by the longitudinal acceleration sensor 50. The longitudinal acceleration dependent suspension control signal generator 51 amplifies the input longitudinal acceleration indicative signal $\beta$ with a given pitching gain value Kx which is determined according to the gain control signal Zx from the gain setting circuit 52 to output the amplified signal as the pitching suppressive suspension control signal Cx. As set forth the polarity of the pitching suppressive control signal Cx to be input to the rear-left and rear-right pressure control valves 18 are opposite to that for the front-left and front-right pressure control valves 18. Therefore, when one of the front and rear suspension systems act to suppress bounding motion at the corresponding portion,of the vehicle, the other suspension systems act for suppressing rebounding motion of the corresponding portion of the vehicvle body.

For example, if nose-dive occurs by braking operation, the front end position of the vehicle body is lowered and the rear end position is lifted up. In response to this, the positive value of the longitudinal acceleration indicative signal $\beta$ is input to the longitudinal acceleration dependent suspension control signal generator circuit 51. The longitudinal accleration dependent suspension control signal generator circuit 51 amplifies the received longitudinal acceleration indicative signal $\beta$ with a given pitching gain Kx to output the suspension control signal Cx. Since the positive value of the pitching suppressive suspension control signal Cx is input to the front-left and front-right pressure control valves 18, the fluid pressure in the hydraulic cylinders 15A of the front-left and front-right suspension systems is increased to suppress lowering of the front end. On the other hand, since the negative value of the pitching suppressive suspension control signal Cx is input to the rear-left and rear-right pressure control valves 18, the fluid pressure in the hydraulic cylinders 15A of the rear-left and rear-right suspension systems is decreased to suppress lifting up of the rear end.

14

As will be appreciated, by adding the roll-damping factor, rolling speed dependent roll-stabilization becomes possible. This will be advantageous to suppress rapid change of the vehicular attitude in vehicular rolling to increase roll-stability of the vehicle.

Though the embodiments has been disclosed for suppressing the attitude change of the vehicle body by adjusting the vehicle height, it should be possible to adjust only damping characteristics in response to the bounding and rebounding strokes of the hydraulic cylinder. Furthermore, the lateral acceleration sensor 29 may be replaced with stroke sensors each detecting a relative displacement between a vehicle body and a wheel for determining lateral acceleration or longitudinal acceleration acting on the vehicle body. For example, differential transducer, ultrasonic distance sensor and so forth, may be applicable. In addition, the hydraulic cylinder may be replaced with any appropriate suspension element, such as pneumatic cylinder, hydropneumatic cylinder and so forth.

**Claims**

1. An actively controlled suspension system for an automotive vehicle, comprising:
   - first, second, third and fourth pressure means (15) incorporated in the suspension system of the automotive vehicle between the vehicle body (12) at a front portion of a first and a second lateral side of the vehicle body and at a rear portion of said first and second lateral side, respectively, and suspension members (13) rotatably supporting a road wheel (14) for supporting said vehicle body (12) on said suspension member (13), each of said pressure means (15) including a variable pressure chamber (15d) being supplied by first, second, third, and fourth pressure control valves (18);
   - sensor means (29,40; 50) comprising means for monitoring lateral acceleration acting on the vehicle body (12) to provide a sensor signal ($\alpha$,Ge;) indicative thereof;
   - a controller (30) responsive to said sensor signal ($\alpha$,Ge;) to amplify said sensor signal ($\alpha$,Ge;) with a preselected gain (Kf,Kr;) to provide suspension control signals ($V_3$) to said pressure control valves (18) for adjusting the fluid pressure (P) in each of said variable pressure chambers (15d) for suppressing attitude change of the vehicle body (12) due to the lateral acceleration,

   **characterized** by
   - a gain setting means (33; 52) which is adapted to vary the preselected gain (Kf,Kr; Kx) according to a preselected gain control signal, said gain setting means comprising a steering angle sensor (37) for monitoring the steering angle ($\delta$) to provide a signal indicative thereof;
   - said controller (30) calculating a front and a rear suspension control signal (Cf,Cr) from said amplified sensor signal responsive to the lateral acceleration ($\alpha$) with a front and a rear gain (Kf,Kr), said front and rear suspension control signal (Cf,Cr) being fed to said first and second pressure control valves (18) and to said third and fourth pressure control valves (18), respectively, to suppress rolling motion caused by the lateral acceleration;
   - said gain setting means (33) being adapted to change the ratio of the front and rear gain control signal (Zf,Zr) in response to the steering angle ($\delta$), for accordingly varying said front and rear gain (Kf,Kr).

2. An actively controlled suspension system as defined in claim 1, **characterized** in that said gain setting means (33) comprises a manual selector unit (36A) for manually setting said ratio of the front to the rear gain control signal (Zf,Zr).

3. An actively controlled suspension system as defined in claim 1 or 2, **characterized** in that said gain setting means (33) is adapted to define an initial and a final stage of the steering operation based on said steering angle ($\delta$) and to determine said front gain (Kf) to be smaller than said rear gain (Kr) at said initial stage and to be greater than said rear gain (Kr) at said final stage.

4. An actively controlled suspension system as defined in any of claims 1 to 3, **characterized** in that said gain setting means (33) comprises a total roll-stability setting means (35) for setting the total-roll stability which determines the sum of said front and rear gain (Kf,Kr) and for providing a signal ($Z_0$) indicative thereof.

5. An actively controlled suspension system as defined in any of claims 1 to 4, **characterized** in that the controller (30) comprises an inverter (38f,38r) to change the sign of the front suspension control signal (Cf) being fed to the second pressure control valve (18) and to change the sign of the rear suspension control signal (Cr) being fed to the fourth pressure control valve (18).

6. An actively controlled suspension system as defined in any of the preceding claims, **characterized** in that said sensor means comprises a lateral acceleration sensor (29) to provide a lateral acceleration indicative signal ($\alpha$).

7. An actively controlled suspension system as defined in any of the preceding claims, **characterized** in that said sensor means comprises a lateral acceleration projecting means (40) comprising a vehicle speed sensor (41) for providing a vehicle speed indicative signal (V) a steering condition detecting means (42) for providing an actual steering angle indicative signal ($\delta$), and an arithmetic means (43) for deriving a projected lateral acceleration (Ge) based on the vehicle speed indicative signal (V) and the actual steering angle indicative signal ($\delta$), to provide a sensor signal indicative of said projected lateral acceleration (Ge).

8. An actively controlled suspension system as defined in claim 7, **characterized** in that said arithmetic means (43) derives said projected lateral acceleration (Ge) according to the following equation:

$$Ge = \frac{V^2}{\ell \cdot (1 + K_s \cdot V^2)} \cdot \delta \cdot \frac{S^2 + 2 \cdot \zeta_2 \cdot \omega_2 \cdot S + \omega_2^2}{S^2 + 2 \cdot \zeta_1 \cdot \omega_1 \cdot S + \omega_1^2} \cdot \frac{\omega_2^2}{\omega_1^2} \quad \cdot \cdot \cdot \ (12)$$

where

$$\zeta_1 = \frac{(C_1 + C_2) \cdot I + \left(\ell_1^2 \cdot C_1 + \ell_2^2 \cdot C_2\right) \cdot M}{2 \cdot \ell \cdot \sqrt{I \cdot M \cdot C_1 \cdot C_2 \cdot \left(1 + K_s \cdot V^2\right)}}$$

$$\zeta_2 = \frac{b}{2 \cdot V} \cdot \sqrt{\frac{\ell \cdot C_2}{I}}$$

$$\omega_1 = \frac{\ell}{V} \cdot \sqrt{\frac{C_1 \cdot C_2}{I \cdot M} \cdot \left(1 + K_s \cdot V^2\right)}$$

$$\omega_2 = \sqrt{\frac{\ell \cdot C_2}{I}}$$

$C_1$     is a cornering force at a front wheel;
$C_2$     is a cornering force at a rear wheel;
$\ell$     is wheel base length;
$\ell_1$     is a distance between the front wheels and a gravity center;
$\ell_2$     is a distance between the rear wheels and a gravity center;
M     is a mass weight of the vehicle;
I     is a yawing moment to be exerted on the vehicle;
$K_s$     is a stability factor;
S     is a Laplace conversion coeffizient;
$\zeta_1, \zeta_2$     are damping ratios; and
$\omega_1, \omega_2$     are natural frequencies.

9. An actively controlled suspension system as defined in any of the preceding claims, **characterized** in that

EP 0 249 246 B1

- said sensor means comprises a longitudinal acceleration sensor (50) to provide a longitudinal acceleration indicative signal ($\beta$);
- front and rear pressure means (15) are provided at a front and a rear portion of the vehicle body (12), and are supplied by front and rear pressure control valves (18), respectively; and
- said controller (30) is adapted to calculate a longitudinal acceleration dependent suspension control signal (Cx) by amplifying the longitudinal acceleration indicative signal ($\beta$) with a pitching gain (Kx) which is determined by said gain setting means (52), said longitudinal acceleration dependent suspension control signal (Cx) being fed to said front pressure control valves (18) and via an inverter (53) to said rear pressure control valves (18), to suppress pitching motion caused by the longitudinal acceleration.

**Patentansprüche**

1. Aktiv gesteuertes Aufhängungssystem für ein Kraftfahrzeug, mit:
   - ersten, zweiten, dritten und vierten Druckeinrichtungen (15) in dem Aufhängungssystem des Kraftfahrzeugs zwischen der Fahrzeugkarosserie (12) in einem vorderen Bereich der ersten und zweiten Seite der Fahrzeugkarosserie und einem hinteren Bereich der ersten und zweiten Seite, und Aufhängungsgliedern (13), die drehbar ein Rad (14) zum Abstützen der Fahrzeugkarosserie (12) auf dem Aufhängungsglied (13) tragen, wobei jede der Druckeinrichtungen (15) eine Kammer (15d) für variablen Druck umfaßt, die durch erste, zweite, dritte und vierte Drucksteuerventile (18) versorgt wird;
   - einer Sensoreinrichtung (29,40;50) mit Einrichtungen zum Überwachen der Querbeschleunigung, die auf die Fahrzeugkarosserie (12) einwirkt, zur Lieferung eines Sensorsignals ($\alpha$,Ge) entsprechend der Querbeschleunigung;
   - einer Steuerung (30), die auf das Sensorsignal ($\alpha$,Ge) anspricht und das Sensorsignal ($\alpha$,Ge) mit einem vorgegebenen Verstärkungsfaktor (Kf,Kr) verstärkt zur Lieferung von Aufhängungssteuersignalen ($V_3$) an die Drucksteuerventile (18) zum Einstellen des Fluiddrucks (P) in jeder der Kammern (15d) für variablen Druck zur Unterdrückung von Stellungsänderungen der Fahrzeugkarosserie (12) aufgrund der Querbeschleunigung,

   **gekennzeichnet** durch
   - eine Einstelleinrichtung (33;52) für den Verstärkungsfaktor, die den vorgegebenen Verstärkungsfaktor (Kf,Kr) entsprechend einem vorgegebenen Verstärkungssteuersignal variiert, welche Einstelleinrichtung für den Verstärkungsfaktor einen Lenkwinkelsensor (37) zur Überwachung des Lenkwinkels (3) zur Abgabe eines entsprechenden Signals umfaßt;
   - welche Steuerung (30) ein vorderes und hinteres Aufhängungssteuersignal (Cf,Cr) berechnet aus dem verstärkten Sensorsignal, das die Querbeschleunigung ($\alpha$) repräsentiert, mit einem vorderen und hinteren Verstärkungsfaktor (Kf,Kr), welches vordere und hintere Aufhängungssteuersignal (Cf,Cr) an die ersten und zweiten Drucksteuerventile (18) beziehungsweise die dritten und vierten Drucksteuerventile (18) geliefert wird zur Unterdrückung der Wankbewegung aufgrund der Querbeschleunigung;
   - welche Einrichtung (33) zur Einstellung des Verstärkungsfaktors vorgesehen ist zur Änderung des Verhältnisses des Verstärkungssteuersignals (Zf,Zr) für vorne und hinten entsprechend dem Lenkwinkel ($\delta$) und zur entsprechenden Änderung des vorderen und hinteren Verstärkungsfaktors (Kf,Kr).

2. Aktiv gesteuertes Aufhängungssystem nach Anspruch 1 dadurch **gekennzeichnet**, daß die Einrichtung (33) zur Einstellung des Verstärkungsfaktors eine manuelle Wähleinheit (36A) zur manuellen Einstellung des Verhältnisses des vorderen und hinteren Verstärkungssteuersignals (Zf,Zr) umfaßt.

3. Aktiv gesteuertes Aufhängungssystem nach Anspruch 1 oder 2, dadurch **gekennzeichnet**, daß die Einrichtung (33) zur Einstellung des Verstärkungsfaktors vorgesehen ist zur Festlegung einer anfänglichen und einer letzten Stufe des Lenkvorganges auf der Basis des Lenkwinkels, und zur Bestimmung des vorderen Verstärkungsfaktors (Kf) als kleiner als der hintere Verstärkungsfaktor (Kr) in der Anfangsstufe und als größer als der hintere Verstärkungsfaktor (Kr) in der Endstufe.

4. Aktiv gesteuertes Aufhängungssystem nach einem der Ansprüche 1 bis 3, dadurch **gekennzeichnet**, daß die Einrichtung (33) zur Einstellung des Verstärkungsfaktors eine Einrichtung (35) zur Einstellung der Gesamt-Wankstabilität umfaßt, die die Summe des vorderen und hinteren Verstärkungsfaktors

17

(Kf,Kr) bestimmt und ein entsprechendes Signal (Z₀) liefert.

**5.** Aktiv gesteuertes Aufhängungssystem nach einem der Ansprüche 1 bis 4, dadurch **gekennzeichnet**, daß die Steuerung (30) einen Inverter (38f,38r) umfaßt zur Änderung des Vorzeichens des vorderen Aufhängungssteuersignals (Cf), das an das zweite Drucksteuerventil (18) gelangt, und zur Änderung des Vorzeichens des hinteren Aufhängungssteuersignals (Cr), das an das vierte Drucksteuerventil (18) gelangt.

**6.** Aktiv gesteuertes Aufhängungssystem nach einem der vorhergehenden Ansprüche, dadurch **gekennzeichnet**, daß die Sensoreinrichtung einen Querbeschleunigungssensor (29) umfaßt, der ein entsprechendes Signal (α) liefert.

**7.** Aktiv gesteuertes Aufhängungssystem nach einem der vorhergehenden Ansprüche, dadurch **gekennzeichnet**, daß die Sensoreinrichtung eine Querbeschleunigungs-Projiziereinrichtung (40) umfaßt mit einem Fahrzeuggeschwindigkeitssensor (41) zur Lieferung eines entsprechenden Signals (V), einem Lenkzustandsdetektor (42) zur Lieferung eines Signals (δ) entsprechend dem jeweiligen Lenkwinkel und einen Rechner (43) zur Ableitung einer projizierten Querbeschleunigung (Ge) auf der Grundlage des für die Fahrzeuggeschwindigkeit repräsentativen Signals (V) und des dem jeweiligen Lenkwinkel entsprechenden Signals (δ) zur Bildung eines Sensorsignals, das repräsentativ ist für die projizierte Querbeschleunigung (Ge).

**8.** Aktiv gesteuertes Aufhängungssystem nach Anspruch 7, dadurch **gekennzeichnet**, daß der Rechner (43) die projizierte Querbeschleunigung (Ge) nach folgender Gleichung ableitet:

$$Ge = \frac{V^2}{\ell \cdot (1 + K_s \cdot V^2)} \cdot \delta \cdot \frac{S^2 + 2 \cdot \zeta_2 \cdot \omega_2 \cdot S + \omega_2^2}{S^2 + 2 \cdot \zeta_1 \cdot \omega_1 \cdot S + \omega_1^2} \cdot \frac{\omega_2^2}{\omega_1^2} \qquad . \quad . \quad . \quad (12)$$

wobei

$$\zeta_1 = \frac{(C_1 + C_2) \cdot I + \left(\ell_1^2 \cdot C_1 + \ell_2^2 \cdot C_2\right) \cdot M}{2 \cdot \ell \cdot \sqrt{I \cdot M \cdot C_1 \cdot C_2 \cdot \left(1 + K_s \cdot V^2\right)}}$$

$$\zeta_2 = \frac{b}{2 \cdot V} \cdot \sqrt{\frac{\ell \cdot C_2}{I}}$$

$$\omega_1 = \frac{\ell}{V} \cdot \sqrt{\frac{C_1 \cdot C_2}{I \cdot M} \cdot \left(1 + K_s \cdot V^2\right)}$$

$$\omega_2 = \sqrt{\frac{\ell \cdot C_2}{I}}$$

| | |
|---|---|
| $C_1$ | ist die Kurvenkraft an einem Vorderrad; |
| $C_2$ | ist die Kurvenrad an einem Hinterrad; |
| $\ell$ | ist die Länge der Radaufstandsfläche; |
| $\ell_1$ | ist ein Abstand zwischen den Vorderrädern und einem Schwerpunkt; |
| $\ell_2$ | ist der Abstand zwischen den Hinterrädern und einem Schwerpunkt; |
| M | ist die Masse des Fahrzeugs; |
| I | ist das auf das Fahrzeug ausgeübte Giermoment; |
| $K_s$ | ist ein Stabilitätsfaktor; |

18

S ist ein Laplace-scher Umwandlungskoeffizient;

$\zeta_1, \zeta_2$ sind Dämpfungsverhältnisse; und

$\omega_1, \omega_2$ sind Eigenfrequenzen.

9. Aktiv gesteuertes Aufhängungssystem nach einem der vorhergehenden Ansprüche, dadurch **gekennzeichnet**, daß

- die Sensoreinrichtung einen Längsbeschleunigungssensor (50) zur Lieferung eines entsprechenden Längsbeschleunigungssignals ($\beta$) umfaßt;
- die vorderen und hinteren Druckeinrichtungen im vorderen und hinteren Bereich der Fahrzeugkarosserie (12) vorgesehen sind und durch vordere und hintere Drucksteuerventile (18) versorgt werden;
- wobei die Steuereinrichtung (30) vorgesehen ist zur Berechnung eines von der Längsbeschleunigung abhängigen Aufhängungssteuersignals (Cx) durch Verstärkung des für die Längsbeschleunigung repräsentativen Signals ($\beta$) mit einem Nick-Verstärkungsfaktor (Kx), der bestimmt wird durch die Einrichtung (52) zur Einstellung des Verstärkungsfaktors, welches von der Längsbeschleunigung abhängende Aufhängungssteuersignal (Cx) an die vorderen Drucksteuerventile (18) und über einen Inverter an die hinteren Drucksteuerventile (18) gelangt, zur Unterdrückung einer Nickbewegung aufgrund der Längbeschleunigung.

## Revendications

1. Système de suspension à contrôle actif pour un véhicule automobile, comprenant :
des premier , deuxième, troisième et quatrième moyens de pression (15) incorporés dans le système de suspension du véhicule automobile entre la caisse de véhicule (12) à une partie avant d'un premier et d'un deuxième côté latéral de la caisse de véhicule et à une partie arrière dudit premier et deuxième côté latéral, respectivement, et des éléments de suspension (13) supportant à rotation une roue de véhicule (14) pour supporter ladite caisse de véhicule (12) sur ledit élément de suspension (13), chacun desdits moyens de pression (15) comprenant une chambre à pression variable (15d) alimentée par des première, deuxième, troisième et quatrième soupapes de commande de la pression (18);

- des moyens capteurs (29,40;50) comprenant des moyens pour surveiller une accélération latérale agissant sur la caisse de véhicule (12) pour fournir un signal de capteur ($\alpha$; Ge) indiquant celle-ci;
- un dispositif de commande (30) répondant audit signal de capteur ($\alpha$, Ge) pour amplifier ledit signal de capteur ($\alpha$, Ge) avec un gain présélectionné (Kf,Kr) pour fournir des signaux de contrôle de suspension (V$_3$) auxdites soupapes de commande de la pression (18) pour régler la pression de fluide (P) dans chacune desdites chambres à pression variable (15d) pour supprimer un changement d'attitude de la caisse de véhicule (12) dû à l'accélération latérale,

**caractérisé par**
un moyen de réglage de gain (33; 52) qui est apte à faire varier le gain présélectionné (KF,Kr; Kx) en accord avec un signal de commande de gain présélectionné, ledit moyen de réglage de gain comprend un capteur d'angle de braquage (37) pour surveiller l'angle de braquage ($\delta$) afin de fournir un signal indiquant celui-ci;

- ledit dispositif de commande (30) calculant un signal de contrôle de suspension avant et de suspension arrière (Cf, Cr) à partir dudit signal de capteur amplifié répondant à l'accélération latérale ($\delta$) avec un gain avant et arrière (Kf, Kr) ledit signal de commande de suspension avant et arrière (Cf, Cr) étant amené auxdites première et deuxième soupapes de commande de la pression (18) et auxdites troisième et quatrième soupapes de commande de la pression (18), respectivement, pour supprimer un mouvement de roulis provoqué par l'accélération latérale;
- ledit moyen de réglage de gain (33) étant apte à faire changer le rapport du signal de commande de gain avant et arrière (Zf,Zr) en réponse à l'angle de braquage ($\delta$), pour faire varier de façon correspondante ledit gain avant et arrière (Kf,Kr).

2. Système de suspension à contrôle actif selon la revendication 1, **caractérisé** en ce que ledit moyen de réglage de gain (33) comprend une unité de sélection manuelle (36A) pour régler manuellement ledit rapport dudit signal de commande de gain avant par rapport à celui de l'arrière (Zf,Zr).

3. Système de suspension à contrôle actif selon la revendication 1 ou 2 **caractérisé** en ce que ledit moyen de réglage de gain (33) est apte à définir un stade initial et un stade final de l'opération de braquage sur la base dudit angle de braquage ($\delta$) et à déterminer ledit gain avant (Kf) afin qu'il soit plus petit que ledit gain arrière (Kr) audit stade initial et afin qu'il soit plus grand que ledit gain arrière (Kr) audit stade final.

4. Système de suspension à contrôle actif selon l'une des revendications 1 à 3 **caractérisé** en ce que ledit moyen de réglage (33) comprend un moyen de réglage (35) de la stabilité du roulis total pour régler la stabilité du roulis total qui détermine la somme desdits gains avant et arrière (Kf,Kr) et pour fournir un signal (Z₀) indiquant celle-ci.

5. Système de suspension à contrôle actif selon l'une des revendications 1 à 4 **caractérisé** en ce que le dispositif de commande (30) comprend un inverseur (38f,38r) pour changer le signe du signal de contrôle de suspension avant (Cf) amené à la deuxième soupape de commande de la pression (18) et pour changer le signe du signal de contrôle de suspension arrière (Cr) amené à la quatrième soupape de commande de la pression (18).

6. Système de suspension à contrôle actif selon l'une des revendications précédentes, **caractérisé** en ce que ledit moyen capteur comprend un capteur d'accélération latérale (29) pour fournir un signal ($\alpha$) indiquant une accélération latérale,

7. Système de suspension à contrôle actif selon l'une des revendications précédentes, **caractérisé** en ce que ledit moyen capteur comprend un moyen de prévision d'accélération latérale (40) comprenant un capteur de vitesse de véhicule (41) pour fournir un signal (V) indiquant la vitesse du véhicule, un moyen (42) détectant une condition de braquage pour fournir un signal ($\delta$) indiquant l'angle de braquage actuel, et un moyen arithmétique (43) pour obtenir une accélératin latérale projetée (Ge) sur la base du signal (V) indiquant la vitesse du véhicule et le signal ($\delta$) indiquant l'angle de braquage actuel, pour fournir un signal de capteur indiquant ladite accélération latérale projetée (Ge).

8. Système de suspension à contrôle actif selon la revendication 7, **caractérisé** en ce que ledit moyen arithmétique (43) permet d'obtenir ladite accélération latérale projetée (Ge) conformément à l'équation suivante :

$$Ge = \frac{V^2}{\ell.(1+K_s.V^2)} \cdot \delta \cdot \frac{S^2+2.\zeta_2.\omega_2.S+\omega_2^2}{S^2+2.\zeta_1.\omega_1.S+\omega_1^2} \cdot \frac{\omega_2^2}{\omega_1^2} \quad \ldots \quad (12)$$

dans laquelle

$$\zeta_1 = \frac{(C_1 + C_2) \cdot I + (\ell_1^2 \cdot C_1 + \ell_2^2 \cdot C_2) \cdot M}{2 \cdot \ell \cdot \sqrt{I \cdot M \cdot C_1 \cdot C_2 \cdot (1 + K_s \cdot V^2)}}$$

$$\zeta_2 = \frac{b}{2 \cdot V} \cdot \sqrt{\frac{\ell \cdot C_2}{I}}$$

$$\omega_1 = \frac{\ell}{V} \cdot \sqrt{\frac{C_1 \cdot C_2}{I \cdot M} \cdot (1 + K_s \cdot V^2)}$$

$$\omega_2 = \sqrt{\frac{\ell \cdot C_2}{I}}$$

| | |
|---|---|
| $C_1$ | est une force de négociation de virage à une roue avant; |
| $C_2$ | est une force de négociation de virage à une roue arrière; |
| $\ell$ | est la longueur de base de la roue; |
| $\ell_1$ | est une distance entre les roues avant et un centre de gravité; |
| $\ell_2$ | est une distance entre les roues arrière et un centre de gravité; |
| M | est un poids de masse du véhicule; |
| I | est un couple de lacet à exercer sur le véhicule; |
| $K_s$ | est un facteur de stabilité; |
| S | est un coefficient de la conversion de Laplace; |
| $\zeta_1$, $\zeta_2$ | sont des rapports d'amortissement; et |
| $\omega_1$, $\omega_2$ | sont des fréquences naturelles. |

9. Système de suspension à contrôle actif selon l'une des revendications précédentes, **caractérisé** en ce que
   - ledit moyen capteur comprend un capteur d'accélération longitudinale (50) pour fournir un signal ($\beta$) indiquant une accélération longitudinale;
   - des moyens de pression avant et arrière (15) sont prévus aux portions avant et arrière de la caisse de véhicule (12) et sont alimentés par les soupapes de commande de pression avant et arrière (18), respectivement; et
   - ledit dispositif de commande (30) est apte à calculer un signal de commande de suspension dépendant de l'accélération longitudinale (Cx) en amplifiant le signal ($\beta$) indiquant l'accélération longitudinale avec un gain de tangage (Kx) qui est déterminé par ledit moyen de réglage de gain (52) ledit signal de commande de suspension dépendant de l'accélération longitudinale (Cx) étant amené auxdites soupapes de commande de pression avant (18) et via un inverseur (53) auxdites soupapes de commande de pression arrière (18) afin de supprimer un mouvement de tangage provoqué par l'accélération lontitudinale.

# FIG. 1

## FIG. 5

## FIG. 2

FIG. 3 (A)

FIG. 3 (B)

## FIG. 4

## FIG. 7

## FIG. 8

25

## FIG. 6

LATERAL ACCELERATION SENSOR — 29

Kf — 33f

Cf

INV. — 38f

Kr — 33r

Cr

INV. — 38r

30

33

GAIN CONTROL SIGNAL GEN. CKT. — 34

$Z_f$ $Z_r$

$Z_o$ α

TOTAL ROLL STABILITY SETTING CKT. — 35

FRONT/REAR DISTRIBUTION SETTING CKT. — 36

36a 36A 36b

STEERING ANGLE SENSOR — 37

δ

$V_3$ PRESSURE CONTROL VALVE (FR) — 18 — HYDRAULIC CYLINDER (FR) — 15A

$V_3$ PRESSURE CONTROL VALVE (FL) — 18 — HYDRAULIC CYLINDER (FL) — 15A

$V_3$ PRESSURE CONTROL VALVE (RR) — 18 — HYDRAULIC CYLINDER (RR) — 15A

$V_3$ PRESSURE CONTROL VALVE (RL) — 18 — HYDRAULIC CYLINDER (RL) — 15A

α

EP 0 249 246 B1

# FIG. 9

# FIG. 10

# FIG. 11

$$\frac{V^2}{\ell(1+K_s V^2)}\delta \cdot \frac{S^2 + 2\zeta_2 \omega_2 S + \omega_2^2}{S^2 + 2\zeta_1 \omega_1 S + \omega_2^2} \cdot \frac{\omega_1^2}{\omega_2^2}$$

# FIG. 12

# FIG. 13

(a)

(b)

# FIG. 14

EP 0 249 246 B1